Europäisches Patentamt

European Patent Office

Office européen des brevets

(11) Publication number: 0 374 083
A1

## (12) EUROPEAN PATENT APPLICATION

(21) Application number: 89730167.7

(22) Date of filing: 19.07.89

(51) Int. Cl.5: **F16L 55/033, F16L 27/10, F24D 3/10**

(30) Priority: 13.12.88 FI 885772

(43) Date of publication of application:
20.06.90 Bulletin 90/25

(84) Designated Contracting States:
AT BE CH DE ES FR GB GR IT LI LU NL SE

(71) Applicant: ORAS OY
PL 40
SF-26101 Rauma(FI)

(72) Inventor: Kaukkila, Lasse
Kinno
SF-26100 Rauma(FI)
Inventor: Weckman, Juhani
Airovahe 2
SF-26200 Rauma(FI)

(74) Representative: UEXKÜLL & STOLBERG
Patentanwälte
Beselerstrasse 4
D-2000 Hamburg 52(DE)

(54) **A sound-insulating intermediate piece for the household-water or heating-water system of a building.**

(57) The invention relates to a sound-insulating intermediate piece for the household-water or heating-water system of a building, the intermediate piece being intended to be connected directly to the components of the system, such as an outlet-pipe connector of a radiator, a household-water fitting, etc. The intermediate piece is made up of at least two tubular or ring-like metal components (1, 2) between which at least one boundary surface (4, 5) is equipped with a resilient and sound-insulating non-metallic seal (3) which produces water-tightness between the components, in which case only one of the said metal components comes into contact with the said component of the system in any given case.

FIG.1

# A sound-insulating intermediate piece for the household-water or heating-water system of a building

The invention relates to a sound-insulating intermediate piece for the household-water or heating-water system in a building, the intermediate piece being intended to be connected directly to some component of the system, such as a radiator valve, radiator, outlet-pipe connector, household-water fitting, etc.

When radiators located in different rooms and apartments in a residential building are linked to each other by means of metallic connection pipes, the system consisting of the radiators and connection pipes conducts sounds in an unpleasant manner from one room or apartment to another, especially when the sound is caused by the mechanical handling of some radiator or connection pipe. Likewise, during use the faucets in a household-water system cause noise, which is conducted to the neighboring apartments via the pipes. For example, a mixer faucet vibrates somewhat, for example owing to the turbulence caused by the flow of water.

Endeavors have been made to prevent such conduction of sounds by installing, for example between connection pipes and radiator valves and/or between connection pipes and the outlet-pipe connectors of radiators, resilient connection pieces such as hoses. Although these connection pieces do insulate sound quite well, their installation often requires the cutting of the connection pipes and threading their ends. Furthermore, if the thread and the leveling out of the ends of the pipes are not done sufficiently well at this time, this installation of a connection piece will cause sealing problems. On the other hand, a sound-insulation joint made using such connection pieces is usually unattractive with its connection nut and hose, which is usually in a loop. At the faucets the use of a resilient hose is not easy, since the rigid mechanical attachment of the faucet is often to the pipe system itself.

The object of the present invention is therefore to eliminate the disadvantages of known technology and to provide an effective sound insulation which can be implemented in a simple manner. This is achieved using an intermediate piece according to the invention, which is characterized in that it is made up of at least two tubular or ring-like metal elements between which at least one of the boundary surfaces is provided with at least one resilient, sound-insulating non-metallic seal which produces water-tightness between the elements, in which case only one of the said metal elements comes into contact with the said component of the network in any given case.

It is the basic idea of the invention to produce sound insulation by means of a tubular metal intermediate piece which comes into contact with a component of the system, the metallic continuity of the metallic intermediate piece being broken at least at one point.

An intermediate piece or connection piece formed in this manner can be installed directly in the place of a former connection piece. The previous connection nuts can be used for the installation, and no cutting of the connection pipes or threading of their ends is required. When the sound-insulating intermediate piece according to the invention is used, the outer appearance of the radiator system or the faucet is in no manner changed, contrary to the situation when using resilient connection hoses. Furthermore, the costs of this connection piece are so low that they do not substantially increase the installation costs.

The intermediate piece according to the invention is made most advantageously and most simply from two metal components fitting partly one inside the other and of seals, for example made up of two rubber O-rings, placed between those surfaces which go one inside the other, the metal components and the seals being locked to each other by means of shoulders formed in those surfaces of the metal component which come one inside the other.

The invention is described below in greater detail with reference to the accompanying drawing, in which

Figure 1 depicts, partly as a cutaway, a sound-insulating intermediate piece according to the invention, intended for a radiator,

Figure 2 depicts, also partly as a cutaway, a slightly altered alternative of the intermediate piece according to Figure 1,

Figure 3 depicts, partly as a cutaway, an intermediate piece according to the invention, intended for the connection pipe of a water faucet,

Figure 4 depicts one alternative intermediate piece for the connecting of a water faucet, and

Figure 5 depicts an intermediate piece installed in the connection pipe of a mixer faucet.

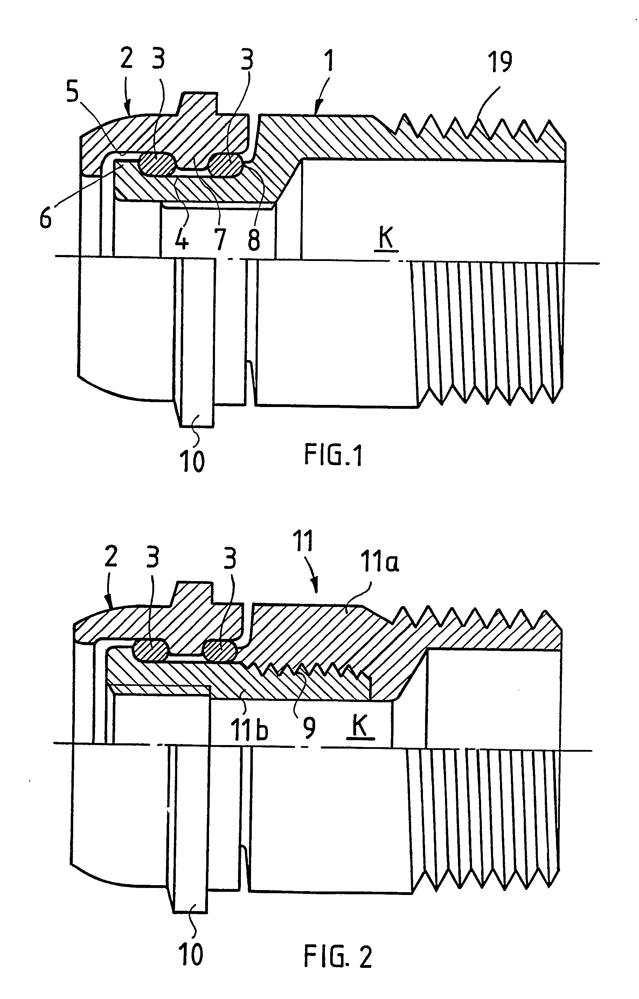

Figure 1 depicts a sound-insulating connection piece installable between a radiator and a radiator valve (not shown in the figures) or between a radiator and its outlet pipe connector (not shown in the figures), the connection piece being made up of two tubular metal components 1 and 2 inside which there is formed a conduit K making the flow of water possible and which have been interconnected by mediation of two resilient, sound-insulating and non-metallic seals 3 which produce water-tightness between the components 1 and 2, the seals being in this case, for example, O-rings made of rubber, plastic or a corresponding material. The components 1 and 2 are partly one inside the other, and the seals 3 are placed between those surfaces 4 and 5 of the components 1 and 2 which are one inside the other, in such a manner that the components 1 and 2 at no point touch each other. The components 1 and 2 and the seals 3 are in this case locked to each other by means of ring-like shoulders 6 and 7 made in the surfaces 4 and 5, the shoulder 6 being at the end of the component 1 and the other shoulder 7 on the surface 5 of the component 2 in such a manner that it is located between the seals 3 and presses one seal against the shoulder 6 and the other seal against the stop surface 8 in the first component. The seals 3 can in this case move in relation to each other only by the amount of the resilience they allow, but not so much that the components 1 and 2 would be able to touch each other. The outer diameter of the component 1 which is partly inside the component 2 is at the shoulder 6 on its outer surface greater than the inner diameter of the component 2 which is partly over the component 1 at the shoulder 7 on its inner surface, so that the joint between the components 1, 2 and the seals is reliable, the components 1 and 2 remaining together even if the seals 3 are damaged.

In the case depicted in Figure 1 the component 1 has been installed inside the component 2 by pressing, whereby the joint described above has been produced and the said dimensions have been achieved.

The structure shown in Figure 2 differs from the structure shown in Figure 1 only as regards one of the metal components, and the difference is that that part 11b of the component 11, corresponding to the component 1 of Figure 1, which is located inside the metal component 2 has been made as a separate part which is secured by means of a thread 9 to the main part 11a of the component 11. In this case no pressing stages are required in assembling the connection piece; the piece is assembled by screwing to the principal part 11a of the component 11 an assembly consisting of the part 11b and the seals 3 placed over it and the component 2, by using an Allen key fitting in the end of the part 11.

The connection pieces described above are secured, by means of a nut (not shown in the figures) fitted over the component 2 and secured to the ring-like protrusion 10 on the outer surface thereof, to the radiator valve or to the outlet pipe connector of the radiator, and to a radiator by means of an exterior thread 19 formed at the end of the component 1, 11, in which case only one metal component will come into contact with the radiator and the radiator valve or with the radiator and its outlet pipe connector in any given case.

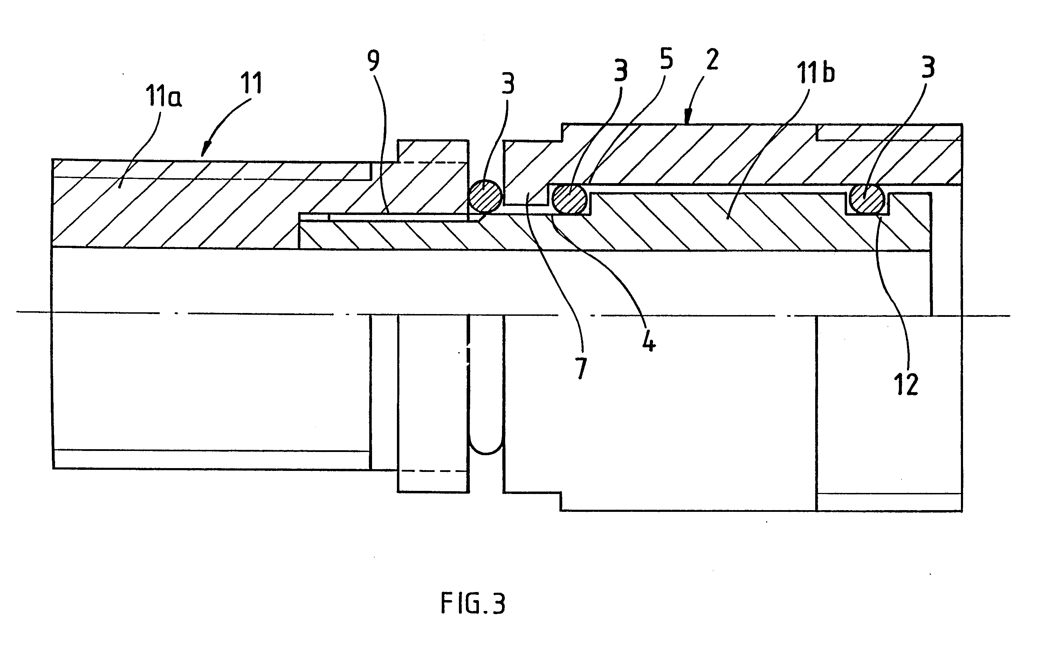

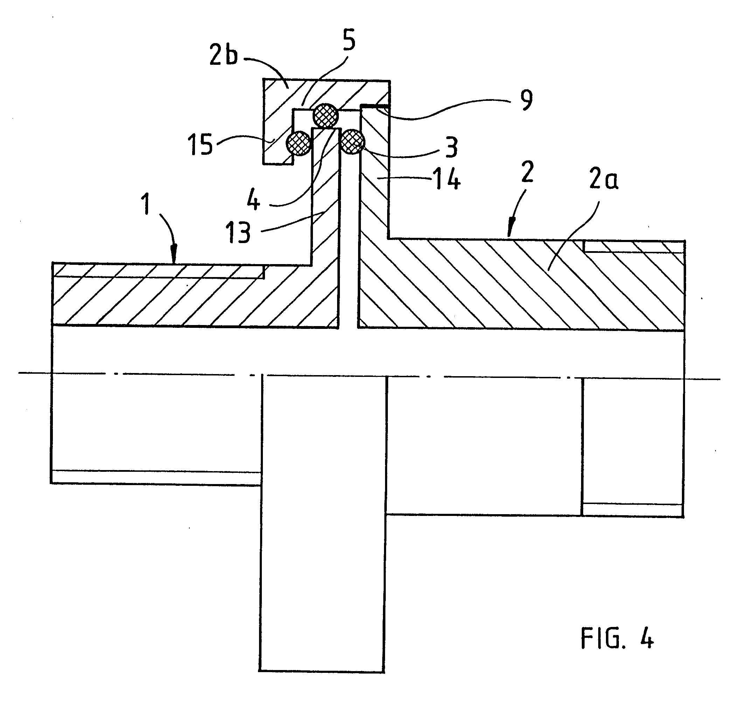

Figures 3 and 4 thus depict an intermediate piece according to the invention, intended for installation between a water faucet and a water pipe. More precisely, the structure of the intermediate piece according to Figure 3 corresponds primarily to the structure according to Figure 2, described above, i.e. here one component 11 is divided into two parts 11a and 11b and the other component 2 is fitted over the latter part 11b. Between the last-mentioned parts there are placed two O-rings 3 so that metallic continuity in the radial direction is broken.

The components 11 and 2 are connected to one another by screwing the part 11B to the end of the part 11a. Between the surfaces of the parts 11a and 2 there is left a third O-ring 3, which breaks the metallic continuity of the components in the axial direction.

Corresponding to Figure 1, reference numerals 4 and 5 indicate the boundary surfaces between the metal components, between which the seal 3 is installed, and numeral 7 indicates the shoulder against which the seal settles. Corresponding to Figure 2, numeral 9 indicates the threaded joint between the parts 11a and 11b. Numeral 12 indicates the groove in which the O-ring 3 is installed.

Figure 4 shows an alternative intermediate piece intended for connecting a faucet. The purpose of this intermediate piece is specifically to reduce the pressure shocks caused in the system by the closing of the faucet. In it there are formed in the components 1 and 2 radial flanges 13 and 14, between which an O-ring 3 which breaks the metallic continuity in the axial direction is installed. In addition, a part 2b, the inward oriented flange 15 of which interlocks with the flange 13 of the part 1, is connected to the flange 14 by means of a threaded joint 9. Between the boundary surfaces 4 and 5 there is an O-ring which breaks the metallic continuity in the radial direction, and additionally there is a third O-ring installed between the flanges 13 and 15.

A pressure shock caused by the closing of the faucet tends to push the parts 1 and 2 of the intermediate piece apart from each other. Since the diameter of the intermediate piece has been intentionally increased, the pressure shock disappears as the O-rings yield to the variation of the volume between the parts 1 and 2 of the intermediate piece.

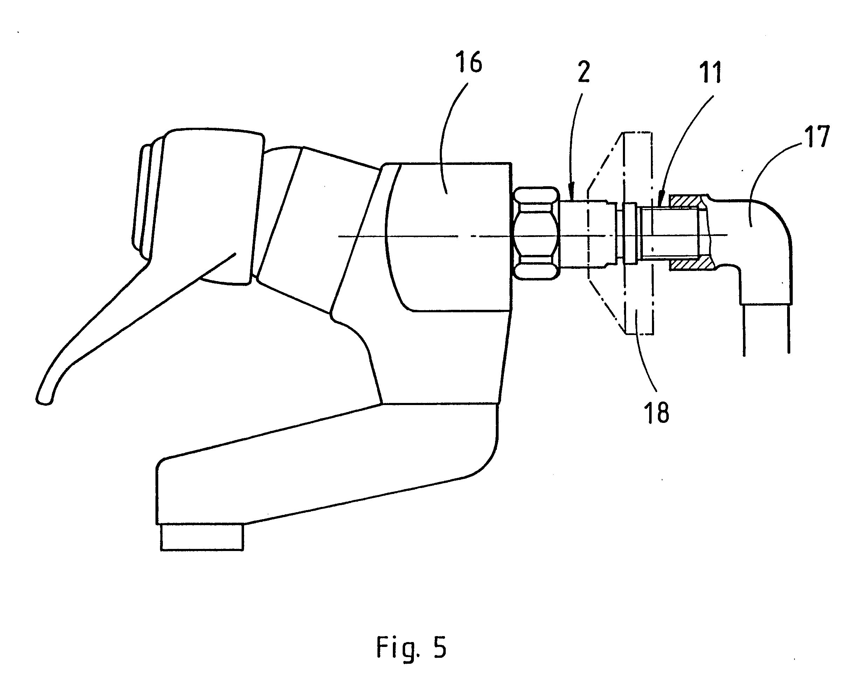

Finally Figure 5 shows the installation of the intermediate piece according to Figure 3 in the connection pipe of a mixer. In the figure the body of the faucet is indicated by reference numeral 16 and the bend provided with an internal thread, close to the wall, is indicated by reference numeral 17. The part 11 of the intermediate piece is screwed to the bend 17 and the connection nut of the faucet for its part is secured to the part 2. The reference numeral 18 indicates the cover plate.

The drawing and the description pertaining to it are intended only by way of illustration of the invention. The details of the intermediate piece may vary considerably within the scope of the patent claims. The only essential idea is that the metallic continuity of the intermediate piece is broken at least at one point.

## Claims

1. A sound-insulating intermediate piece for the household-water or heating-water system of a building, which intermediate piece is intended to be connected directly to a component of the system, such as a radiator valve, radiator, outlet pipe connector, household-water fitting, etc., **characterized** in that it is made up of at least two tubular or ring-like metal components (1, 2; 11, 2) between which at least one boundary surface (4, 5) is equipped with at least one resilient, sound-insulating, non-metallic seal (3) which produces water-tightness between the components, in which case only one of the said metal components comes into contact with the said component of the system in any given case.

2. An intermediate piece according to Claim 1, **characterized** in that the metal components (1, 2; 11, 2) are partly one inside the other, the seal (3) being placed between those surfaces (4, 5) of the components which come one inside the other, there being in the surfaces means (6, 7) for locking the metal components and the seal to each other.

3. An intermediate piece according to Claim 2, **characterized** in that the means for locking the metal components (1, 2; 11, 2) and the seal (3) to each other are made up of ring-like shoulders (6, 7) or grooves made in those surfaces (4, 5) of the components which come one inside the other.

4. An intermediate piece according to Claim 2 or 3 **characterized** in that that part (11b) of the first component (11) which is inside the second component (2) is made as a separate part which is secured by means of a thread (9) to the principal part of the first component (11).

5. An intermediate piece according to Claim 4,**characterized** in that at least one ring-like seal (3) is installed between the end surfaces of the principal part (11a) of the first component (11) and the second component (2).

6. An intermediate piece according to Claim 1, wherein at least one ring-like seal (3) is installed between those end surfaces of the metal components (1, 2) which face each other, **characterized** in that the end surfaces have been made in the radially expanded flanges (13, 14) of the metal components (1, 2) in such a manner that inside the seal (3) there remains a space substantially wider in diameter than the pipes of the system, in which case the seal (3) at the same time allows an axial yield of the metal components (1, 2) in relation to each other.

7. An intermediate piece according to any of the above claims, **characterized** in that the seal (3) is of rubber.

8. An intermediate piece according to any of the Claims 1-6. **characterized** in that the seal (3) is of plastic.

9. An intermediate piece according to any of the above claims, **characterized** in that the seal (3) is an O-ring.

FIG.1

FIG. 2

FIG.3

EP 0 374 083 A1

FIG. 4

EP 0 374 083 A1

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 180 305 (ENDER)<br>* Page 2, abstract; fig. *<br>--- | 1,2,3,4 ,5,6 | F 16 L 55/033<br>F 16 L 27/10<br>F 24 D 3/10 |
| X | CH-A- 578 146 (HUBER & SUHNER AG)<br>* Column 2, lines 29-34; fig. *<br>--- | 1,2,3,4 ,5,6,7 | |
| A | FR-A- 856 486 (THIRY)<br>* Fig. *<br>----- | 1,2,3,4 ,5,6,7, 9 | |

TECHNICAL FIELDS
SEARCHED (Int. Cl.5)

F 16 L
F 24 D

The present search report has been drawn up for all claims

| Place of search | Date of completion of the search | Examiner |
|---|---|---|
| THE HAGUE | 19-03-1990 | HUBEAU M.G. |

EPO FORM 1503 03.82 (P0401)